# EUROPÄISCHE PATENTSCHRIFT

(11) **EP 2 184 191 B1**
(45) Veröffentlichungstag und Bekanntmachung des Hinweises auf die Patenterteilung: **10.11.2010**
(21) Anmeldenummer: 09173775.9
(22) Anmeldetag: 22.10.2009
(51) Int. Cl.: B60H 1/24

(54) **Lüftungsklappenanordnung**
Ventilation flap assembly
Agencement de clapets d'aération

(30) Priorität: 11.11.2008 DE 102008056756
(43) Veröffentlichungstag der Anmeldung: 12.05.2010
(73) Patentinhaber: EuWe Eugen Wexler GmbH, 91207 Lauf (DE)
(72) Erfinder: Jansen, Helge, 92289 Ursensollen (DE)
(74) Vertreter: Hübner, Gerd

(56) Entgegenhaltungen:
- EP-A- 0 645 268
- EP-A- 0 728 606
- DE-A1- 4 002 052
- DE-A1- 19 548 551

## Beschreibung

Die Erfindung betrifft eine Lüftungsklappenanordnung, insbesondere zur Entlüftung eines Kraftfahrzeug-Innenraums, mit Abdeckklappen und einem Rahmen zur Halterung der Abdeckklappen. Weiterhin betrifft die Erfindung ein Verfahren zur Herstellung einer derartigen Lüftungsklappenanordnung.

Aus der DE 40 02 052 A1 ist eine Lüftungsklappenanordnung mit einem Innenrahmen, einem Außengehäuse und Abdeckklappen bekannt, wobei die aus sehr weichem, flexiblen Material bestehenden Abdeckklappen zwischen den Innenrahmen und das Außengehäuse geklemmt werden. Die Herstellung einer derartigen Lüftungsklappenanordnung erfolgt in einem aufwendigen Montageprozess mit vielen Einzelbauteilen.

Weiterhin ist aus der DE 195 48 551 A1 bekannt, dass Abdeckklappen einstückig mit einem Rahmen mittels üblicher Zweikomponenten-Spritzgießverfahren hergestellt werden. Diese Herstellverfahren erfordern aufwendige Werkzeuge und ggf. daran angepasste Spritzgussmaschinen. Die Herstellung einer Lüftungsklappenanordnung im Mehrkomponenten-Spritzgießverfahren ist kostenintensiv.

Außerdem ist aus der DE 195 48 551 A1 und aus der EP 0 645 268 A1 bekannt, die Abdeckklappen durch eine an den Rahmen angeformte Klenunleiste oder durch daran angebrachte Laschen zu fixieren. Derartig fixierte Abdeckklappen können hinsichtlich eines abdichtenden Anliegens an den Rahmen einer Lüftungsklappenanordnung problematisch sein.

Aus der EP 0 728 606 A1, der als nächstliegender Stand der Technik angesehen wird, ist weiterhin eine Lüftungsklappenanordnung und ein Verfahren bekannt.

Der Erfindung liegt die Aufgabe zugrunde, eine Lüftungsklappenanordnung sowie ein Verfahren zur Herstellung einer derartigen Lüftungsklappenanordnung hinsichtlich einer kostengünstigen Befestigung von Abdeckklappen an einem Rahmen derart zu schaffen, dass eine Bauteilanzahl verringert, eine Montage vereinfacht und die Dichtheit einer Lüftungsklappenanordnung gewährleistet wird.

Diese Aufgabe wird in produkttechnischer Hinsicht durch die Merkmale des Anspruchs 1 sowie in verfahrenstechnischer Hinsicht durch die Merkmale des Anspruchs 10 gelöst. Der Kern der Erfindung besteht darin, dass eine flexible Abdeckklappe mit einer von zwei Seitenwangen gebildeten Aufnahme-Nut eines Rahmens durch Prägen unlösbar verbunden ist. Eine derartige Lüftungsklappenanordnung ist einfach zu montieren und weist eine verringerte Anzahl an Bauteilen auf, insbesondere ist ein separater Spannrahmen nicht mehr vorgesehen. Dadurch werden Werkzeuginvestitionskosten und Maschinenbelegungszeiten reduziert. Mindestens eine Seitenwange ragt mit einer Ausprägung in mindestens eine an der Abdeckklappe randnah ausgebildete Öffnung, so dass die unlösbare Verbindung der Abdeckklappe mit der Aufnahme-Nut durch Formschluss in wenigen kleinen inselförmigen Fügebereichen realisierbar ist. Die Abdeckklappen sind aus weichelastischem Material hergestellt, um ein abdichtendes Anliegen der Abdeckklappen an dem Rahmen zu garantieren. Die Abdeckklappen können mindestens eine Ausklinkung zur Aufnahme einer zu der Ausklinkung korrespondierenden Aussteifungsrippe einer Aufnahme-Nut aufweisen. Der Rahmen weist Stützrippen auf, an welchen die Seitenwangen der Aufnahme-Nuten angebracht sind. Die Stützrippen dienen außerdem dem abdichtenden Anliegen einer an einer benachbarten Stützrippe angebrachten Abdeckklappe. Die Aufnahme-Nuten können derart ausgebildet sein, dass sie sich zu einem Nutgrund hin verjüngen, so dass das Einlegen der Abdeckklappen in die Aufnahme-Nuten erleichtert ist. Ein Montage-Absatz an dem Rahmen der Lüftungsklappenanordnung ermöglicht eine definierte Anbringung der Lüftungsklappenanordnung in einem Entlüftungskanal.

Ein Verfahren zur Herstellung einer Lüftungsklappenanordnung umfasst neben dem Bereitstellen einer oder mehrerer flexibler Abdeckklappen und eines Rahmens mit einer von zwei Seitenwangen gebildeten Aufnahme-Nut das Einlegen der Abdeckklappe zwischen die beiden Seitenwangen in die Aufnahme-Nut sowie das unlösbare Verbinden der Abdeckklappe mit der Aufnahme-Nut durch Prägen. Ein derartiges Verfahren weist wenige Fertigungsschritte auf. Die Umformung der mindestens einen Seitenwange mit einem Prägestempel, so dass eine Ausprägung der mindestens einen Seitenwange in mindestens eine an der Abdeckklappe randnah ausgebildete Öffnung hineinragt oder zumindest die Abdeckklappe klemmend hält, ist automatisierbar und kostengünstig durchführbar. Durch die Erzeugung der Ausprägungen der Seitenwangen durch ein beiderseits darauf einwirkendes Prägestempel-Paar wird die maximale Umformung der Seitenwangen reduziert. Die Beaufschlagung des zu prägenden Bereiches der Seitenwange mit Temperaturen im Bereich zwischen einer Formbeständigkeitstemperatur und einer Schmelztemperatur eines zu prägenden Materials und/oder Ultraschall erhöht die Umformbarkeit des Materials, aus welchem die Seitenwangen hergestellt sind.

Weitere vorteilhafte Ausgestaltungen der Erfindung ergeben sich aus den Unteransprüchen, deren Merkmale und Einzelheiten in der nachfolgenden Beschreibung anhand der Zeichnung näher erläutert werden. Es zeigen:
- Fig. 1 und 2: Querschnitte einer Lüftungsklappenanordnung in un- terschiedlichen Ausführungsbeispielen,
- Fig. 3 und 4: Draufsichten von Abdeckklappen ohne und mit Aus- klinkungen,
- Fig. 5 und 6: vergrößerte Detail-Querschnitte von Abdeckklappen während ihrer Anbindung an einen Rahmen in einem ersten Fertigungszwischenschritt,
- Fig. 7 und 8: Querschnitte analog den Figuren 5 und 6 in einem nachfolgenden Fertigungszwischenschritt mit einem einseitigen Prägevorgang in verschiedenen Prägerich- tungen,
- Fig. 9: einen Querschnitt analog Fig. 8 mit einem einseitigen Prägevorgang mit umgeformter Seitenwange einer Aufnahme-Nut,
- Fig. 10 bis 12: nochmals vergrößerte Querschnitte einseitiger Präge- vorgänge mit umgeformten Seitenwangen und
- Fig. 13: einen Querschnitt analog Fig. 7 und 8 mit einem beid- seitigen Prägevorgang.

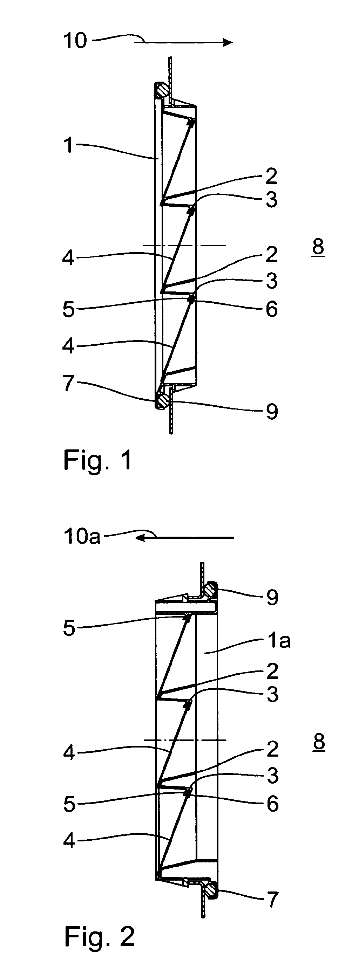

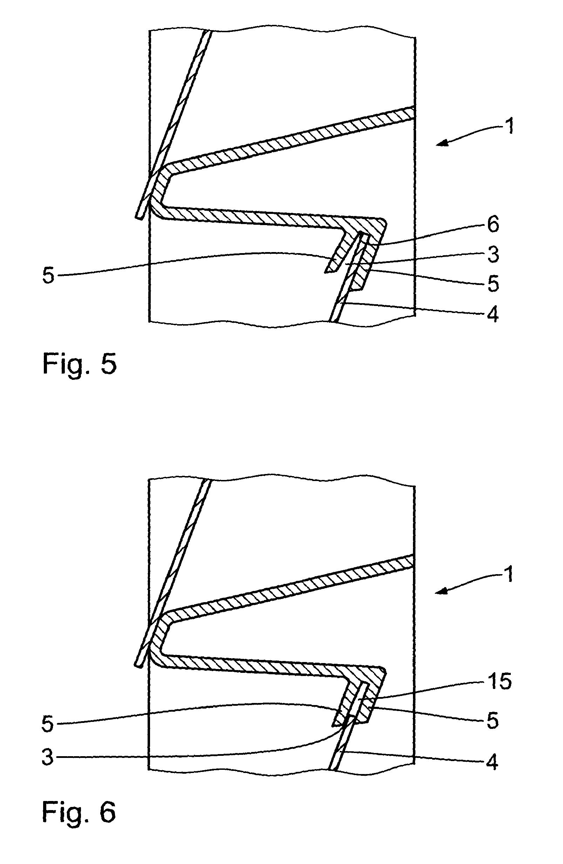

Die in Figur 1 und 2 dargestellten Lüftungsklappenanordnungen weisen einen Rahmen 1, 1a mit mehreren Stützrippen 2 und mehreren Aufnahme-Nuten 3 zur Halterung von Abdeckklappen 4 auf, wobei jede Aufnahme-Nut 3 von zwei Seitenwangen 5, die einstückig an den Rahmen 1, 1a angeformt sind, gebildet wird. Für ein leichteres Einführen der Abdeckklappe 4 in die Aufnahme-Nut 3 können die Seitenwangen 5 jeweils eine zur Aufnahme-Nut 3 hin orientierte Einführschräge aufweisen. Die Aufnahme-Nut 3 kann mehrere Aussteifungsrippen 15 (vgl. Fig. 6) umfassen, die zwischen den beiden Seitenwangen 5 in einem Nutgrund 6 einstückig an der Stützrippe 2 angeformt sind. Die Aussteifungsrippen 15 dienen der Stabilisierung der von den Seitenwangen 5 gebildeten Aufnahme-Nut 3, sodass ein eventueller Verzug der Seitenwangen 5 und damit eine Gestaltabweichung der Aufnahme-Nut 3 infolge eines vorangegangenen Herstellverfahrens, insbesondere eines Spritzgießprozesses mit anschließendem Abkühlvorgang, reduziert werden. Der Rahmen 1, 1a weist einen Montage-Absatz 7 zur Anbringung der Lüftungsklappenanordnung in einem Entlüftungskanal, insbesondere eines Kraftfahrzeuges, auf. Zur luftdichten Abdichtung eines Fahrzeug-Innenraums 8 gegenüber dem Entlüftungskanal kann in dem Montage-Absatz 7 eine Dichtung 9 angebracht sein. Zur Anbringung der Lüftungsklappenanordnung in dem Entlüftungskanal zur Entlüftung eines Kraftfahrzeug-Innenraums 8 wird die Lüftungsklappenanordnung entlang einer Montagerichtung 10, 10a in den Entlüftungskanal eingeführt. Eine Montage der Lüftungsklappenanordnung von einer dem Kraftfahrzeug-Innenraum 8 gegenüberliegenden Öffnung des Entlüftungskanals in Richtung des Kraftfahrzeug-Innenraums 8 erfolgt in der Montage-Richtung 10 und eine Montage der Lüftungsklappenanordnung von dem Kraftfahrzeug-Innenraum 8 in den Entlüftungskanal erfolgt in Montage-Richtung 10a. Der Montage-Absatz 7 dient einer definierten Positionierung der Lüftungsklappenanordnung in dem Entlüftungskanal. Die aus biegeweichem Material gefertigten Abdeckklappen 4 sind jeweils von einer Aufnahme-Nut 3 gehalten, die von zwei an einer Stützrippe 2 angebrachten Seitenwangen 5 gebildet wird, wobei die Abdeckklappen 4 im Ruhezustand, d. h. es liegt keine Entlüftung vor, an einer der zur Halterung der Abdeckklappe 4 dienenden Stützrippe 2 benachbarten Stützrippe 2 abdichtend anliegen. Dadurch wird gewährleistet, dass die Lüftungsklappenanordnung nach Art eines Rückschlagventils ein Entweichen von Luft aus dem Fahrzeug-Innenraum 8 in den Entlüftungskanal erlaubt und gleichzeitig das Einströmen von Luft von dem Entlüftungskanal in den Fahrzeug-Innenraum 8 verhindert.

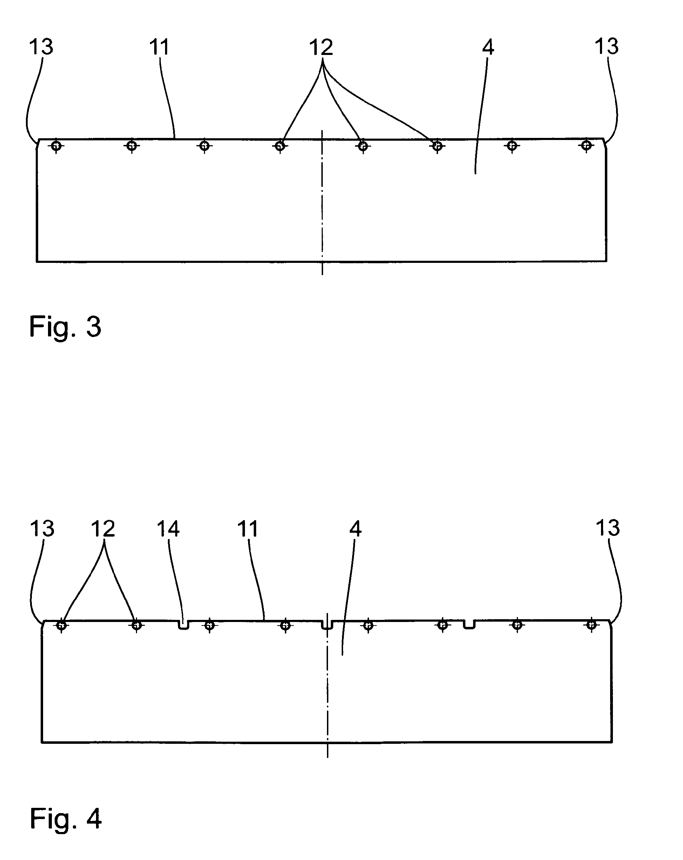

Eine in Figur 3 dargestellte flexible Abdeckklappe 4 hat eine gestreckte rechteckige Form und weist mehrere nahe ihrem einen Längsrand 11 angeordnete Öffnungen 12, sowie jeweils eine seitliche Einführschräge 13 an einem Ende des Längsrandes 11 zum leichteren Einführen der Abdeckklappe 4 in eine nicht dargestellte Aufnahme-Nut auf. Die Öffnungen 12 sind rund, sie können aber auch rechteckig, quadratisch oder als Langlöcher ausgeführt sein. Die Bedeutung der Öffnungen 12 wird im weiteren Verlauf noch erläutert. Die flexible Abdeckklappe 4 kann auch ohne Öffnungen 12 und ohne Einführschrägen 13 ausgeführt sein.

Figur 4 zeigt eine der in Figur 3 dargestellten ähnliche flexible Abdeckklappe 4, die zusätzlich Ausklinkungen 14 umfasst, welche eine rechteckige, insbesondere eine quadratische, Form haben und der Aufnahme von Aussteifungsrippen 15 (vgl. Fig. 6) einer nicht dargestellten Aufnahme-Nut bei einem Montagevorgang der Abdeckklappen 4 an dem Rahmen 1, 1 a dienen. Eine Außenkontur der Aussteifungsrippe 15 korrespondiert mit der Form der Ausklinkung 14.

Figur 5 zeigt die Anbindung einer Abdeckklappe 4 gemäß Figur 3 an einen Rahmen 1 in einem ersten Fertigungsschritt. Dazu wird die Abdeckklappe 4 in eine von zwei Seitenwangen 5 gebildete Aufnahme-Nut 3, die zu einem Nutgrund 6 hin verjüngend ausgebildet ist, eingelegt, so dass das Einführen der Abdeckklappe 4 in die Aufnahme-Nut 3 zusätzlich erleichtert ist.

Figur 6 zeigt die Anbindung einer Abdeckklappe 4 gemäß Figur 4 an einen Rahmen 1 in einem ersten Fertigungsschritt. Auch hier wird die Abdeckklappe 4 in eine von zwei Seitenwangen 5 gebildete Aufnahme-Nut 3 eingelegt, wobei die Seitenwangen 5 der Aufnahme-Nut 3 im Wesentlichen parallel zueinander angeordnet sind. Durch die Aufnahme von Aussteifungsrippen 15 der Aufnahme-Nut 3 in Ausklinkungen der Abdeckklappe 4 wird die Abdeckklappen 4 in der Aufnahme-Nut 3 positioniert.

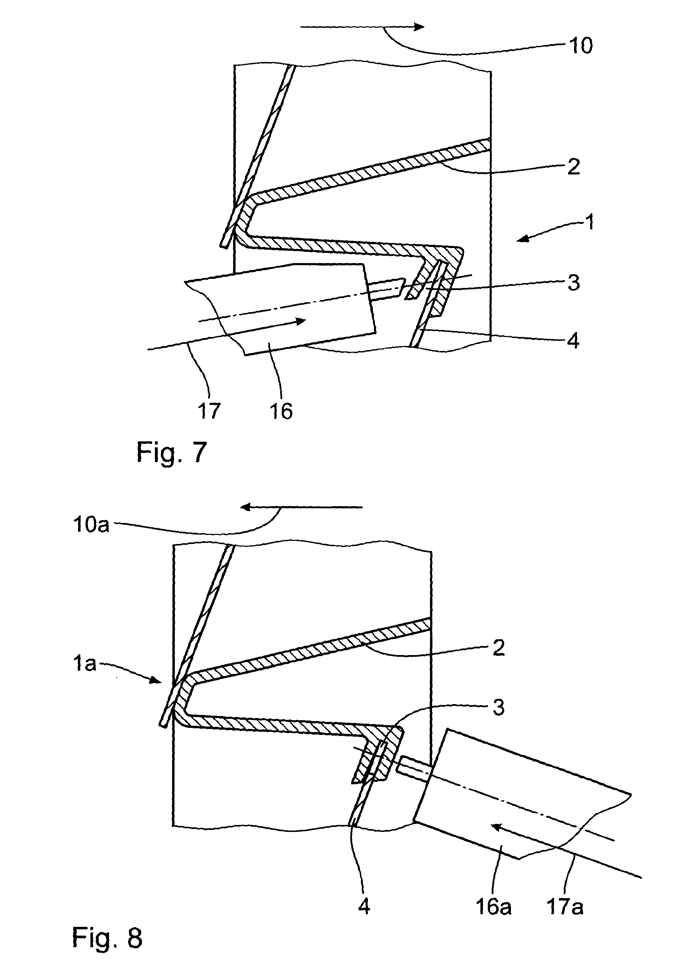

Die Figuren 7 und 8 zeigen Ausführungsbeispiele eines einseitigen Prägeprozesses als einen dem in den Figuren 5 oder 6 dargestellten ersten Fertigungsschritt nachfolgenden Fertigungsschritt zum unlösbaren Verbinden einer Abdeckklappe 4 mit einer Aufnahme-Nut 3 an einer Stützrippe 2 durch einen Prägestempel 16, 16a. In Abhängigkeit einer Montage-Richtung 10, 10a variiert eine Prägerichtung 17, 17a, entlang der der Prägestempel 16, 16a gegen eine Seitenwange 5 der Aufnahme-Nut 3 wirkt. Die Prägerichtung 17, 17a entspricht im Wesentlichen der Montage-Richtung 10, 10a. Die Geometrie des Prägestempels 16, 16a ist an die jeweilige Form der Stützrippen 2 eines Rahmens 1, 1a, der Aufnahme-Nut 3 und der Abdeckklappe 4 sowie einem zu prägenden Material angepasst. Die Prägerichtung 17, 17a kann auch entsprechend einer gewünschten Sichtbarkeit einer Prägung gewählt werden.

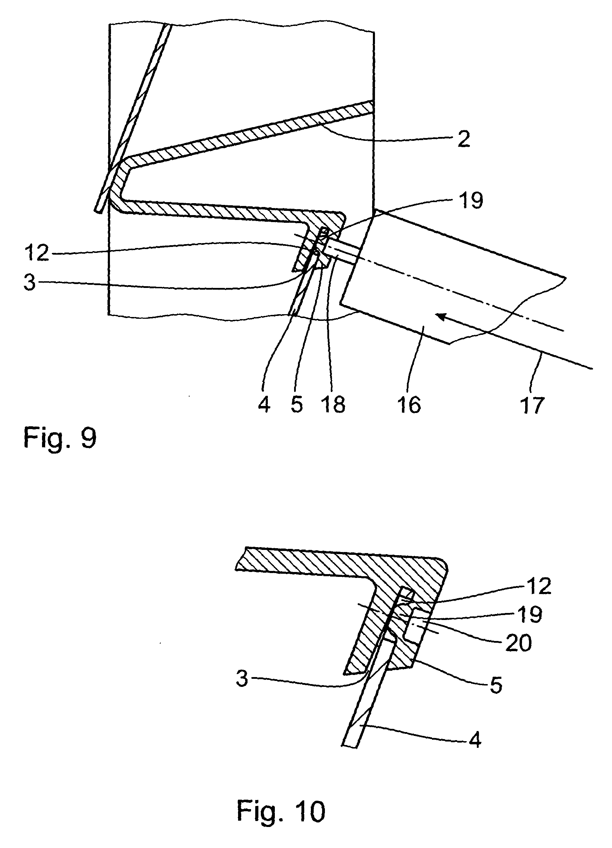

Eine in den Figuren 9 und 10 dargestellte unlösbare Verbindung einer Abdeckklappe 4 mit einer Aufnahme-Nut 3 wird durch einseitiges Prägen mit einem Prägestempelkopf 18 eines Prägestempels 16 entlang einer Prägerichtung 17 hergestellt. Infolge des Prägevorgangs wird eine Seitenwange 5 der Aufnahme-Nut 3 mit dem Prägestempel 16 derart umgeformt, dass eine Ausprägung 19 der Seitenwange 5 gebildet wird. Nach abgeschlossenem Prägevorgang ragt in jede Öffnung 12 der Abdeckklappe 4 eine Ausprägung 19. Die umgeformte Seitenwange 5 weist nach dem Prägevorgang eine mit einer Ausprägung 19 korrespondierende Einprägung 20 auf, die durch die Einwirkung des Prägestempelkopfes 18 erzeugt worden ist. Die Ausprägung 19 und die Einprägung 20 haben eine dem Prägestempelkopf 18 korrespondierende runde Querschnittsfläche. Die Querschnittsfläche der Ausprägung 19 und der Einprägung 20 kann aber auch rechteckig oder quadratisch sein, wobei die Form der Ausprägung 19 mit der Form der Öffnung 12 korrespondiert.

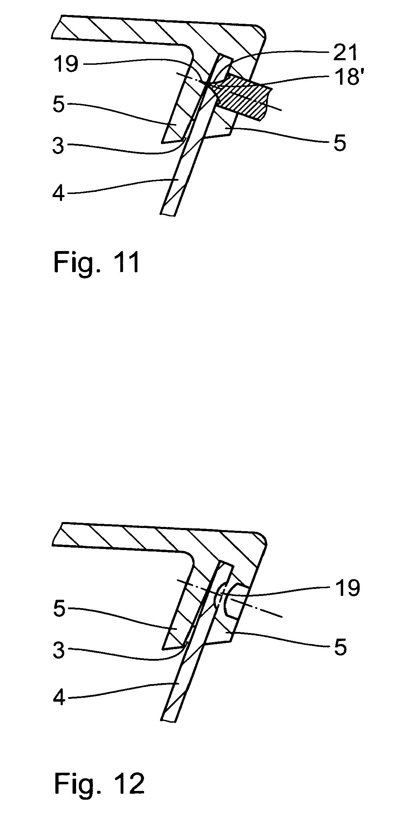

Figur 11 zeigt eine vergrößert dargestellte unlösbare Verbindung einer Abdeckklappe 4 mit einer Aufnahme-Nut 3, wobei ein einseitiger Prägevorgang mit einem im Wesentlichen, kegelförmig ausgebildeten Kopf 18' eines Prägestempels durchgeführt wird. Die verwendete Abdeckklappe weist keine Öffnungen auf, so dass infolge des Prägevorgangs eine Seitenwange 5 der Aufnahme-Nut 3 mit dem Prägestempel derart umgeformt wird, dass eine Ausprägung 19 der Seitenwange 5 gebildet wird. Die Abdeckklappe wird dabei von einem spitz zulaufenden Ende des kegelförmigen Stempelkopfes unter Bildung einer Lochung 21 durchstoßen, wobei durch Nachdrücken von Material sich die Ausprägung 19 in der Lochung 21 bildet. Die Ausprägung 19 der einen Seitenwand 5 kann in Verbindung mit der anderen Seitenwand 5 der Aufnahme-Nut 3 stehen.

Figur 12 zeigt ebenfalls eine vergrößert dargestellte unlösbare Verbindung einer Abdeckklappe 4, die keine Öffnungen aufweist, mit einer Aufnahme-Nut 3. Infolge eines Prägevorgangs ist eine Seitenwange 5 der Aufnahme-Nut 3 mit einem Prägestempel derart umgeformt, dass eine Ausprägung 19 der Seitenwange 5 in die die Abdeckklappe 4 aufnehmende Aufnahme-Nut 3 hineinragt. Dadurch ist die Abdeckklappe 4 in der Aufnahme-Nut 3 geklemmt.

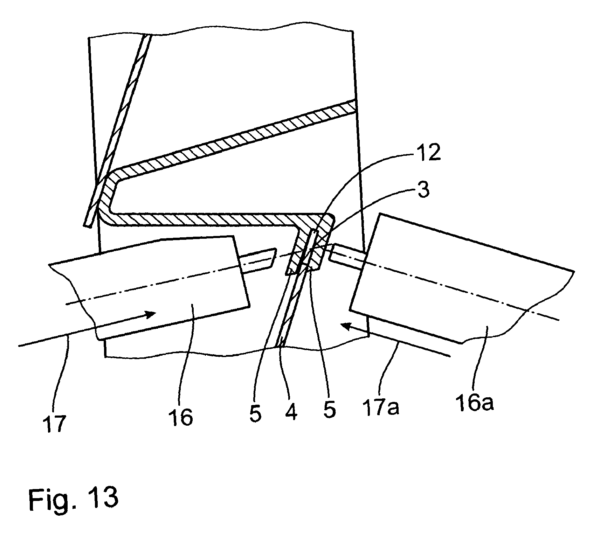

Mit einem in Figur 13 dargestellten Prägestempel-Paar 16, 16a wird ein beidseitiger Prägevorgang analog dem in den Figuren 7 und 8 gezeigten einseitigen Prägevorgang ermöglicht. Dabei wirkt das Prägestempel-Paar 16, 16a auf beide Seitenwangen 5 einer Aufnahme-Nut 3 einer Lüftungsklappenanordnung unter Ausbildung jeweils einer Ausprägung beider Seitenwangen 5. Die Seitenwange 5 wird zur Herstellung der Ausprägung im beidseitigen Prägevorgang weniger umgeformt als zur Ausbildung einer Ausprägung in einem einseitigen Prägevorgang. Jeder Prägestempel 16, 16a wirkt im beidseitigen Prägevorgang entlang einer Prägerichtung 17, 17a, wobei die Prägerichtungen 17, 17a verschiedene Orientierungen aufweisen, die sich in einer von einer Abdeckklappe 4 aufgespannten Ebene bei jeweils einer Öffnung 12 schneiden.

Der Rahmen 1, der mehrere Stützrippen 2 mit jeweils zwei daran einstückig angebrachten Seitenwangen 5 aufweist, wird aus Kunststoff, insbesondere im Spritzgussverfahren, hergestellt. Die Abdeckklappe 4 besteht aus einem weichelastischen Material und wird insbesondere durch Stanzen hergestellt. Ein Prägevorgang für ein unlösbares Verbinden der Abdeckklappe 4 mit einer Aufnahme-Nut 3, die von zwei Seitenwangen 5 gebildet wird, kann bei geeigneter Materialauswahl bei Raumtemperatur durch Kaltprägen erfolgen. Ein mögliches Material ist ein unter der Bezeichnung "Baroplastic" verfügbarer Kunststoff auf der Basis einer Mischung von vergleichsweise starrem Polystyrol und relativ weichem Polybutyl-Acrylat. Dieser Werkstoff ist bereits bei Raumtemperatur allein unter Druck verformbar.

Ein zu prägender Bereich der Seitenwange 5 kann zudem auf eine Temperatur im Bereich zwischen einer Formbeständigkeitstemperatur und einer Schmelztemperatur eines zu prägenden Materials erwärmt werden, um eine bessere Umformbarkeit der Seitenwange 5 zu erreichen. Ein bevorzugt verwendetes Material ist PP 6.2 Recyclat, dessen Formbeständigkeitstemperatur 86 °C und dessen Schmelztemperatur 163 °C beträgt. Zur Erreichung dieser Temperaturen kann ein mit 280 °C bis 350 °C beheizter Prägestempel 14, 14a verwendet werden. Alternativ kann die Erwärmung des zu prägenden Bereiches der Seitenwange 5 auch durch von einem auf 400 °C bis 550 °C erwärmten Heizelement abgegebene Strahlungswärme erfolgen. Die Umformbarkeit der Seitenwange 5 kann auch dadurch erhöht werden, dass der zu prägende Bereich mit Ultraschall beaufschlagt wird. Ein dafür bevorzugter Frequenzbereich beträgt in Abhängigkeit einer eingesetzten Sonotrode 20 kHz bis 40 kHz.

Eine verbesserte Stabilität der Prägeverbindung kann erzielt werden, indem zwischen einer Ausprägung einer ersten Seitenwange infolge einer Temperatur- und/oder Ultraschalleinwirkung und einer der ersten Seitenwange gegenüber angeordneten zweiten Seitenwange eine haftende Verbindung geschaffen wird. Als besonders geeignet für einen Prägevorgang bei erhöhter Temperatur und/oder bei Ultraschallbeaufschlagung haben sich die Kunststoffe Acrylnitril-Butadien-Styrol (ABS), Polyamid 6 (PA 6), Polypropylen (PP), Polyphenylensulfid (PPS), Polycarbonat (PC) und Polystyrol (PS) erwiesen. Die Kunststoffe Acrylnitril-Butadien-Styrol mit Polycarbonat-Blend (ABS-PCB), Polyoxymethylen (POM), Polyamid 6.6 (PA 6.6) und Polybutylenterephthalat (PBT) eignen sich für das temperaturunterstützte Prägen gut, für das Prägen mit Ultraschall jedoch nur bedingt.

## Patentansprüche

1. Lüftungsklappenanordnung, insbesondere zur Entlüftung eines Kraftfahrzeug-Innenraums, mit
- eine oder mehrere flexible Abdeckklappen (4) und
- einen Rahmen (1; 1a) zur Halterung der Abdeckklappen (4), wobei der Rahmen (1; 1a) für eine Abdeckklappe (4) eine von zwei Seitenwangen (5) gebildete Aufnahme-Nut (3) aufweist,
**dadurch gekennzeichnet, dass** die Abdeckklappe (4) mit der Aufnahme-Nut (3) des Rahmens (1; 1a) durch Prägen unlösbar verbunden ist.

2. Lüftungsklappenanordnung nach Anspruch 1, **dadurch gekennzeichnet, dass** mindestens eine Seitenwange (5) mit einer Ausprägung (19) in mindestens eine an der Abdeckklappe (4) randnah ausgebildeten Öffnung (12) hineinragt.

3. Lüftungsklappenanordnung nach einem der vorgenannten Ansprüche, **dadurch gekennzeichnet, dass** die Abdeckklappe (4) mit der Aufnahme-Nut (3) durch mindestens eine Ausprägung (19) einer Seitenwange (5) klemmend verbunden ist.

4. Lüftungsklappenanordnung nach einem der vorgenannten Ansprüche, **dadurch gekennzeichnet, dass** die Abdeckklappen (4) aus einem weichelastischen Material bestehen.

5. Lüftungsklappenanordnung nach einem der vorgenannten Ansprüche, **dadurch gekennzeichnet, dass** die Abdeckklappen (4) mindestens eine Ausklinkung (14) und die Aufnahme-Nuten (3) zu der mindestens einen Ausklinkung (14) mindestens eine korrespondierende Aussteifungsrippe (15) aufweisen.

6. Lüftungsklappenanordnung nach einem der vorgenannten Ansprüche, **dadurch gekennzeichnet, dass** der Rahmen (1; 1a) eine Stützrippe (2) aufweist, an der die Seitenwangen (5) einer Aufnahme-Nut (3) angebracht sind.

7. Lüftungsklappenanordnung nach einem der vorgenannten Ansprüche, **dadurch gekennzeichnet, dass** die Abdeckklappen (4) im Ruhezustand an den Stützrippen (2) abdichtend anliegen.

8. Lüftungsklappenanordnung nach einem der vorgenannten Ansprüche, **dadurch gekennzeichnet, dass** die Aufnahme-Nuten (3) sich zu einem Nutgrund (6) hin verjüngend ausgebildet sind.

9. Lüftungsklappenanordnung nach einem der vorgenannten Ansprüche, **dadurch gekennzeichnet, dass** der Rahmen (1; 1 a) einen Montage-Absatz (6) zur Anbringung in einem Entlüftungskanal, insbesondere eines Kraftfahrzeuges, aufweist.

10. Verfahren zur Herstellung einer Lüftungsklappenanordnung, insbesondere zur Entlüftung eines Kraftfahrzeug-Innenraums, umfassend die folgenden Verfahrensschritte:
- Bereitstellen einer oder mehrerer flexibler Abdeckklappen (4),
- Bereitstellen eines Rahmens (1; 1a) zur Halterung der Abdeckklappen (4), wobei der Rahmen (1; 1a) für eine Abdeckklappe (4) eine von zwei Seitenwangen (5) gebildete Aufnahme-Nut (3) aufweist,
- Einlegen der Abdeckklappe (4) zwischen die beiden Seitenwangen (5) der Aufnahme-Nut (3) des Rahmens (1; 1a) und
- unlösbares Verbinden der Abdeckklappe (4) mit der Aufnahme-Nut (3) durch Prägen.

11. Verfahren nach Anspruch 10, **dadurch gekennzeichnet, dass** mindestens eine Seitenwange (5) mit einem Prägestempel (16; 16a) derart umgeformt wird, dass eine Ausprägung (19) der mindestens einen Seitenwange (5) in mindestens eine an der Abdeckklappe (4) randnah ausgebildeten Öffnung (12) hineinragt.

12. Verfahren nach Anspruch 11, **dadurch gekennzeichnet, dass** die Ausprägung (19) der Seitenwangen (5) durch ein beiderseits darauf einwirkendes Prägestempel-Paar (16; 16a) erzeugt wird.

13. Verfahren nach einem der Ansprüche 10 bis 12, **dadurch gekennzeichnet, dass** mindestens eine Seitenwange (5) mit dem Prägestempel (16; 16a) derart umgeformt wird, dass die Abdeckklappe (4) in der Aufnahme-Nut (3) von einer Ausprägung (19) geklemmt wird.

14. Verfahren nach einem der Ansprüche 10 bis 13, **dadurch gekennzeichnet, dass** der zu prägende Bereich der mindestens einen Seitenwange (5) auf eine Temperatur im Bereich zwischen einer Formbeständigkeitstemperatur und einer Schmelztemperatur eines zu prägenden Materials erwärmt wird.

15. Verfahren nach einem der Ansprüche 10 bis 14, **dadurch gekennzeichnet, dass** der zu prägende Bereich der mindestens einen Seitenwange (5) mit Ultraschall beaufschlagt wird.

## Claims

1. Ventilation flap arrangement, in particular for venting a motor vehicle interior, with
- one or more flexible cover flaps (4) and
- a frame (1; 1a) for holding the cover flaps (4), the frame (1; 1a) for a cover flap (4) having a receiving groove (3) formed by two side cheeks (5),
**characterised in that** the cover flap (4) is non-detachably connected to the receiving groove (3) of the frame (1; 1a) by embossing.

2. Ventilation flap arrangement according to claim 1, **characterised in that** at least one side cheek (5) projects with an embossed projection (19) into at least one opening (12) formed close to the edge on the cover flap (4).

3. Ventilation flap arrangement according to any one of the preceding claims, **characterised in that** the cover flap (4) is connected in a clamping manner to the receiving groove (3) by at least one embossed projection (19) of one side cheek (5).

4. Ventilation flap arrangement according to any one of the preceding claims, **characterised in that** the cover flaps (4) consist of a soft elastic material.

5. Ventilation flap arrangement according to any one of the preceding claims, **characterised in that** the cover flaps (4) have at least one notch (14) and the receiving grooves (3) have at least one reinforcement rib (15) corresponding to the at least one notch (14).

6. Ventilation flap arrangement according to any one of the preceding claims, **characterised in that** the frame (1; 1a) has a support rib (2), on which the side cheeks (5) of a receiving groove (3) are attached.

7. Ventilation flap arrangement according to any one of the preceding claims, **characterised in that** the cover flaps (4) rest in a sealing manner on the support ribs (2) in the rest state.

8. Ventilation flap arrangement according to any one of the preceding claims, **characterised in that** the receiving grooves (3) taper to a groove base (6).

9. Ventilation flap arrangement according to any one of the preceding claims, **characterised in that** the frame (1; 1a) has an assembly shoulder (6) for attachment in a venting channel, in particular of a motor vehicle.

10. Method for producing a ventilation flap arrangement, in particular for venting a motor vehicle interior, comprising the following method steps:
- providing one or more flexible cover flaps (4),
- providing a frame (1; 1a) to hold the cover flaps (4), the frame (1; 1a) for a cover flap (4) having a receiving groove (3) formed by two side cheeks (5),
- inserting the cover flap (4) between the two side cheeks (5) of the receiving groove (3) of the frame (1; 1a) and
- non-detachably connecting the cover flap (4) to the receiving groove (3) by embossing.

11. Method according to claim 10, **characterised in that** at least one side cheek (5) is formed by an embossing die (16; 16a) in such a way that an embossed projection (19) of the at least one side cheek (5) projects into at least one opening (12) formed close to the edge on the cover flap (4).

12. Method according to claim 11, **characterised in that** the embossed projection (19) of the side cheeks (5) is produced by an embossing die pair (16; 16a) acting thereon on both sides.

13. Method according to any one of claims 10 to 12, **characterised in that** at least one side cheek (5) is formed by the embossing die (16; 16a) in such a way that the cover flap (4) is clamped in the receiving groove (3) by an embossed projection (19).

14. Method according to any one of claims 10 to 13, **characterised in that** the region to be embossed of the at least one side cheek (5) is heated to a temperature in the range between a dimensional stability temperature and a melting temperature of a material to be embossed.

15. Method according to any one of claims 10 to 14, **characterised in that** the region to be embossed of the at least one side cheek (5) is acted upon by ultrasound.

## Revendications

1. Système de volets de ventilation, en particulier pour la ventilation d'un habitacle de véhicule automobile, comportant
- un ou plusieurs volets d'obturation (4) flexibles, et
- un cadre (1 ; 1a) pour maintenir les volets d'obturation (4), ledit cadre (1 ; 1a) comportant pour un volet d'obturation (4) une rainure de réception (3), formée par deux joues latérales (5),
**caractérisé en ce que** le volet d'obturation (4) est assemblé de manière inamovible par estampage avec la rainure de réception (3) du cadre (1 ; 1a).

2. Système de volets de ventilation selon la revendication 1, **caractérisé en ce qu'**au moins une joue latérale (5) s'engage avec une protubérance (19) dans au moins une ouverture (12) réalisée à proximité du bord du volet d'obturation (4).

3. Système de volets de ventilation selon l'une quelconque des revendications précédentes, **caractérisé en ce que** le volet d'obturation (4) est assemblé de manière bloquée avec la rainure de réception (3) par l'intermédiaire d'au moins une protubérance (19) d'une joue latérale (5).

4. Système de volets de ventilation selon l'une quelconque des revendications précédentes, **caractérisé en ce que** les volets d'obturation (4) sont réalisés dans un matériau souple et élastique.

5. Système de volets de ventilation selon l'une quelconque des revendications précédentes, **caractérisé en ce que** les volets d'obturation (4) comportent au moins une encoche (14) et les rainures de réception (3) comportent au moins une nervure de raidissement (15) correspondant avec ladite au moins une encoche (14).

6. Système de volets de ventilation selon l'une quelconque des revendications précédentes, **caractérisé en ce que** le cadre (1 ; 1a) comporte une nervure d'appui (2), sur laquelle sont appliquées les joues latérales (5) d'une rainure de réception (3).

7. Système de volets de ventilation selon l'une quelconque des revendications précédentes, **caractérisé en ce que** les volets d'obturation (4), dans la position de repos, sont en appui étanche contre les nervures d'appui (2).

8. Système de volets de ventilation selon l'une quelconque des revendications précédentes, **caractérisé en ce que** les rainures de réception (3) sont réalisées en se rétrécissant vers un fond de rainure (6).

9. Système de volets de ventilation selon l'une quelconque des revendications précédentes, **caractérisé en ce que** le cadre (1 ; 1a) comporte une saillie de montage (6), pour la mise en place dans un conduit de ventilation, en particulier d'un véhicule automobile.

10. Procédé de réalisation d'un système de volets de ventilation, en particulier pour la ventilation d'un habitacle de véhicule automobile, comportant les étapes suivantes :
- mise à disposition d'un ou de plusieurs volets d'obturation (4),
- mise à disposition d'un cadre (1 ; 1a) pour maintenir les volets d'obturation (4), ledit cadre (1 ; 1a) comportant pour un volet d'obturation (4) une rainure de réception (3), formée par deux joues latérales (5),
- mise en place du volet d'obturation (4) entre les deux joues latérales (5) de la rainure de réception (3) du cadre (1 ; 1a), et
- assemblage inamovible du volet d'obturation (4) avec la rainure de réception (3) par estampage.

11. Procédé selon la revendication 10, **caractérisé en ce qu'**au moins une joue latérale (5) est formée avec un poinçon (16 ; 16a), de telle sorte qu'une protubérance (19) de ladite au moins une joue latérale (5) s'engage dans au moins une ouverture (12) réalisée à proximité du bord du volet d'obturation (4).

12. Procédé selon la revendication 11, **caractérisé en ce que** la protubérance (19) des joues latérales (5) est générée par une paire de poinçons (16 ; 16a) agissant de part et d'autre sur celles-ci.

13. Procédé selon l'une quelconque des revendications 10 à 12, **caractérisé en ce qu'**au moins une joue latérale (5) est formée avec le poinçon (16 ; 16a), de telle sorte que le volet d'obturation (4) est bloqué dans la rainure de réception (3) par une protubérance (19).

14. Procédé selon l'une quelconque des revendications 10 à 13, **caractérisé en ce que** la zone à estamper de ladite au moins une joue latérale (5) est chauffée à une température dans une plage entre une température de stabilité de forme et une température de fusion d'un matériau à estamper.

15. Procédé selon l'une quelconque des revendications 10 à 14, **caractérisé en ce que** la zone à estamper de ladite au moins une joue latérale (5) est sollicitée par ultrasons.
